# EUROPÄISCHE PATENTSCHRIFT

(11) **EP 2 444 340 B1**
(45) Veröffentlichungstag und Bekanntmachung des Hinweises auf die Patenterteilung: **06.03.2013**
(21) Anmeldenummer: 11008382.1
(22) Anmeldetag: 18.10.2011
(51) Int. Cl.: B65G 47/08, B65G 47/91

(54) **System und Verfahren zum Ergreifen und Anheben von Objekten**
System and method for gripping and raising objects
Système et procédé pour saisir et soulever des objets

(30) Priorität: 21.10.2010 DE 102010049192
(43) Veröffentlichungstag der Anmeldung: 25.04.2012
(73) Patentinhaber: Multivac Sepp Haggenmüller GmbH & Co. KG, 87787 Wolfertschwenden (DE)
(72) Erfinder: Lang, Michael, 87642 Buching (DE); Geiger, Uwe, 87730 Bad Grönenbach (DE)
(74) Vertreter: Grünecker, Kinkeldey, Stockmair & Schwanhäusser

(56) Entgegenhaltungen:
- EP-A1- 0 280 659
- EP-A1- 0 530 426
- US-A- 3 701 297
- US-B1- 6 192 778

## Beschreibung

Die Erfindung bezieht sich auf ein Greifersystem gemäß dem Oberbegriff des Anspruchs 1, sowie auf eine Verpackungsmaschine mit einem solchen Greifersystem und auf ein Verfahren zum Ergreifen und Anheben einer Spur oder Reihe von Verpackungen mittels eines Greifersystems.

Um einen hohe Produktivität zu erreichen, werden in Verpackungsmaschinen häufig in einem Arbeitsgang gleichzeitig eine Vielzahl von Verpackungen hergestellt. Beispielsweise werden in einer Verschließstation der Verpackungsmaschine in einem Arbeitstakt mehrere Verpackungen gleichzeitig verschlossen. Die Gruppe von verschlossenen Verpackungen wird anschließend gemeinsam auf einer Abführfläche oder auf einem Abführförderer bereit gestellt. Gegebenenfalls kann zwischen dem Verschließen und dem Bereitstellen auf der Abführfläche noch eine Vereinzelung bisher miteinander verbundener Verpackungen erfolgen.

Um eine Gruppe von Verpackungen gleichzeitig herstellen zu können, kann eine Verpackungsmaschine mehrere nebeneinander liegende Spuren von Verpackungen herstellen. Zudem können in den Arbeitswerkzeugen der Verpackungsmaschine mehrere hintereinander liegende Reihen von Verpackungen gleichzeitig behandelt werden. In einem Arbeitsgang können auf diese Weise gleichzeitig n x m Verpackungen bearbeitet oder hergestellt werden, nämlich eine Gruppe von Verpackungen aus n Spuren und m Reihen, wobei n und m ganze Zahlen sind und beispielsweise einen Wert von 1 bis 10 haben können. In einem einzigen Arbeitsschritt können also beispielsweise 15 Verpackungen bearbeitet oder hergestellt werden, die sich in drei nebeneinander liegenden Spuren und in fünf hintereinander angeordneten Reihen befinden.

Im Anschluss an ihre Herstellung müssen die Verpackungen häufig vereinzelt werden, um beispielsweise einzeln auf Qualität der Verpackung oder Gewicht überprüft zu werden. Eine vergleichsweise komplizierte Variante besteht darin, einen Abführförderer so auszubilden, dass für jede Spur von Verpackungen ein einzelnes Förderband vorgesehen ist. Wenn die einzelnen Förderbänder unabhängig von einander antreibbar sind, kann jeweils eine Spur von Verpackungen nach der nächsten abtransportiert werden.

Eine andere Technik besteht darin, einzelne Verpackungen oder eine Gruppe von Verpackungen mittels eines Greifersystems vom Abführförderer oder von der Abführfläche abzuheben, um sie einer Vereinzelung zuzuführen. Bei dieser Technik besteht jedoch das Problem, dass die Verpackungen beim Abnehmen keine definierte Position zueinander aufweisen, da ihre Bewegung beispielsweise von der inhomogenen Verteilung des Produkts in den einzelnen Verpackungen abhängt. Dies führt dazu, dass sich die Verpackungen verlagern oder verdrehen können, sodass sich benachbarte Verpackungen in Transportrichtung und/oder quer zur Transportrichtung überlappen. Wenn nun mittels des Greifersystems eine Verpackung oder eine Gruppe von Verpackungen angehoben wird, tritt gelegentlich das Problem auf, dass benachbarte, überlappende Packungen angehoben werden, sodass sie sich verdrehen oder unkontrolliert in ihrer Lage verändern können und dann einem automatischen Transport nicht mehr zugänglich sind.

Aufgabe der vorliegenden Erfindung ist es, dieses Problem mit konstruktiv möglichst einfachen Mitteln zu beheben.

Diese Aufgabe wird gelöst durch ein Greifersystem mit den Merkmalen des Anspruchs 1 beziehungsweise durch ein Verfahren mit den Merkmalen des Anspruchs 12. Vorteilhafte Weiterbildungen der Erfindung sind in den Unteransprüchen angegeben.

Das erfindungsgemäße Greifersystem zeichnet sich dadurch aus, dass es einen Niederhalter aufweist, der zum Niederhalten wenigstens eines neben dem zu ergreifenden Objekt gelegenen Objekts während des Anhebens des zu ergreifenden Objekts (beispielsweise einer Verpackung) ausgebildet ist. Selbst wenn das niedergehaltene Objekt das zu ergreifende Objekt berührt oder dieses sogar überlappt, verhindert, beschränkt oder bremst der Niederhalter eine Bewegung des niedergehaltenen Objekts. Dadurch kann sicher verhindert werden, dass eine Bewegung des ergriffenen Objekts die benachbarten Objekte beeinträchtigt oder sogar zu einem unkontrollierten Verändern der Lage der benachbarten Objekte führt.

Vorzugsweise ist der Greifer zum Ergreifen einer Mehrzahl von Objekten ausgebildet, und der Niederhalter ist zum Niederhalten einer Mehrzahl von Objekten ausgebildet. Auf diese Weise kann das Abtransportieren von Objekten, beispielsweise von Verpackungen aus einer Verpackungsmaschine, deutlich beschleunigt werden. Zur Vereinzelung der Objekte wäre es denkbar, dass der Greifer zum zeitlich gestaffelten Loslassen einzelner Objekte ausgebildet ist.

In einer Variante der Erfindung ist der Greifer zum Ergreifen einer Spur von Objekten ausgebildet, und der Niederhalter ist analog zum Niederhalten einer Spur von Objekten ausgebildet. Diese Variante ist besonders geeignet für eine Verpackungsmaschine, bei der Verpackungen in mehreren nebeneinander liegenden Spuren hergestellt und bereitgestellt werden. Mittels des Greifers kann jeweils eine Spur von Objekten ergriffen und abtransportiert werden. Nacheinander kann auf diese Weise Spur für Spur abtransportiert werden.

Günstig ist es, wenn der Greifer wenigstens einen Sauggreifkopf zum Ergreifen eines einzelnen Objekts aufweist. Solch ein Sauggreifkopf hat den Vorteil, dass er von oben an dem Objekt angreifen kann. Insbesondere bei zum Teil dicht nebeneinander liegenden Objekten kann auf diese Weise eine Beeinträchtigung und ungewollte Verlagerung von neben den zu ergreifenden Objekten liegenden Objekten verhindert werden.

Der Niederhalter könnte eine elastisch nachgebende Oberfläche aufweisen, an der er mit dem niederzuhaltenden Objekt oder mit den niederzuhaltenden Objekten in Kontakt tritt. Die elastische Nachgiebigkeit der Kontaktoberfläche verhindert eine Beschädigung der niederzuhaltenden Objekte. Dies ist insbesondere bei empfindlichen oder unregelmäßig geformten Objekten vorteilhaft.

In einer Ausführungsvariante kann es sich bei der mit den Objekten in Kontakt tretenden, elastischen nachgebenden Oberfläche des Niederhalters um eine Oberfläche einer Schaumstofflage handeln. Diese Ausführungsvariante ist besonders einfach.

Alternativ dazu könnte es sich bei der elastischen nachgebenden Oberfläche um die Oberfläche einer Platte oder Leiste handeln, die auf einer Schaumstofflage, auf wenigstens einer Feder, auf einem Luftkissen und/oder auf einem anderen elastischen Element gelagert ist. Bei dieser Ausführungsvariante kann es genügen, wenn die Platte oder Leiste nur an wenigen - beispielsweise zwei oder drei - Punkten elastisch gelagert ist.

In einer vergleichsweise einfachen Ausführungsform ist der Niederhalter stets an die Bewegung des Greifers gekoppelt. Dies hat den Vorteil, dass sich der Niederhalter genau dann auf niederzuhaltende Objekte absenkt, wenn sich der Greifer auf zu ergreifende Objekte absenkt. Auf diese Weise wird mit geringem konstruktivem Aufwand sichergestellt, dass der Niederhalter stets gleichzeitig oder in einer definierten zeitlichen Relation mit dem Greifer mit Objekten in Kontakt tritt.

Alternativ dazu wäre es denkbar, dass der Greifer zumindest über einen Teil seines Bewegungsbereichs unabhängig vom Niederhalter bewegbar ist. Diese Variante ist konstruktiv etwas aufwändiger. Sie hat jedoch den Vorteil, dass der Niederhalter die niederzuhaltenden Objekte länger niederhalten kann, auch während einer einsetzenden Bewegung des Greifers.

Bei letzterer Variante wäre es möglich, dass der Greifer dazu konfiguriert ist, eine horizontal- und/oder Schwenkbewegung unabhängig von einer Bewegung des Niederhalters auszuführen. Durch eine solche Bewegung könnten beispielsweise mittels des Greifers erfasste Objekte seitlich von den niedergehaltenen Objekten entfernt oder von den niedergehaltenen Objekten weggeschwenkt werden.

Die Erfindung bezieht sich auch auf eine Verpackungsmaschine mit einem Greifersystem der vorstehend beschriebenen Art. In diesem Fall handelt es sich bei den Objekten um Verpackungen, die zuvor mittels der Verpackungsmaschine hergestellt wurden.

Ferner bezieht sich die Erfindung auf ein Verfahren zum Ergreifen und Anheben einer Spur von Verpackungen mittels eines Greifersystems. Bei diesem Verfahren wird eine neben der zu ergreifenden Spur von Verpackungen liegende Spur von Verpackungen während einer durch das Greifersystem verursachten Bewegung der zu ergreifenden Spur von Verpackungen in ihrer Bewegung eingeschränkt und/oder gebremst. Insbesondere wäre es denkbar, dass die in ihrer Bewegung eingeschränkte und/oder gebremste Spur von Verpackungen niedergehalten, d. h. an einer vertikalen Bewegung gehindert wird, oder dass sogar jegliche Bewegung der niedergehaltenen Verpackungen verhindert wird.

Das erfindungsgemäße Greifersystem lässt sich nicht nur an Verpackungsmaschinen oder für Verpackungen einsetzen. Vielmehr kann es sich bei den ergriffenen und niedergehaltenen Objekten um jegliche Art von Objekten handeln, bei denen eine Deplatzierung von neben den zu ergreifenden Objekten gelegenen Objekten verhindert werden soll.

Im Folgenden werden vorteilhafte Ausführungsbeispiele der Erfindung anhand einer Zeichnung näher erläutert. Im Einzelnen zeigen:
- Figur 1:: eine Draufsicht auf eine Gruppe von 3 x 6 gleichzeitig mit einer Verpackungsmaschine hergestellten Verpackungen,
- Figur 2:: eine schematische, perspektivische Ansicht eines ersten Ausführungsbeispiels eines erfindungsgemäßen Greifersystems,
- Figur 3:: eine schematische Frontalansicht des in Figur 2 gezeigten Greifersystems,
- Figur 4:: einen schematische, perspektivische Ansicht eines zweiten Ausführungsbeispiels eines Greifersystems und
- Figur 5:: eine schematische Frontalansicht des in Figur 4 gezeigten Greifersystems.

Gleiche Komponenten sind in den Figuren durchgängig mit gleichen Bezugszeichen versehen worden.

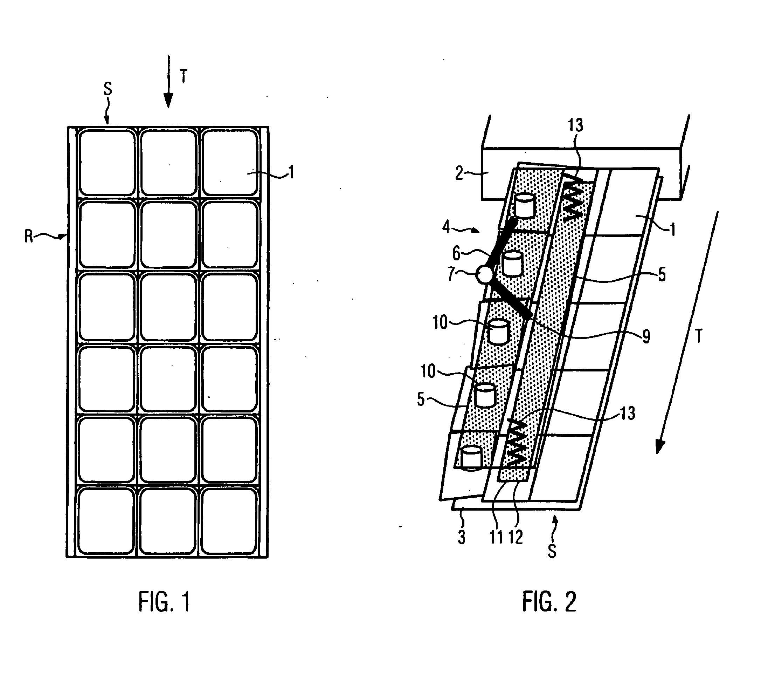

Figur 1 zeigt eine Draufsicht auf eine Gruppe von achtzehn Verpackungen 1, die in einem Arbeitstakt gleichzeitig in einer Verpackungsmaschine 2 (siehe Figur 2) hergestellt wurden. Die Gruppe von achtzehn Verpackungen 1 wird in einer durch den Pfeil angegebenen Transportrichtung T in der Verpackungsmaschine 2 beziehungsweise aus der Verpackungsmaschine 2 heraus transportiert. Dabei werden die Verpackungen 1 in drei in Transportrichtung T neben einander liegenden Spuren sowie in sechs in Transportrichtung T hintereinander gestaffelten Reihen R transportiert. Benachbarte Verpackungen 1 können voneinander durch Längs- und /oder Querschnitte vereinzelt sein. Denkbar ist es auch, dass die zum Vereinzeln verwendeten Schneideeinrichtungen einen Abstand von einigen Millimetern, beispielsweise von vier Millimetern, zwischen benachbarten Verpackungen 1 erzeugen, um später das Vereinzeln der Verpackungen 1 zu erleichtern.

Figur 2 zeigt in sehr schematischer Darstellung eine erfindungsgemäße Verpackungsmaschine 2, die die ebenfalls nur sehr schematisch dargestellten Verpackungen 1 herstellt. Nach ihrer Fertigstellung werden die Verpackungen 1 in Transportrichtung T auf eine Abführebene 3 befördert, bei der es sich auch um ein Abfuhr-Förderband handeln kann. Die Gesamte Gruppe von n x m Verpackungen, im vorliegenden Fall 15 Verpackungen 1, die in n = 3 Spuren S und in m = 5 Reihen angeordnet sind, gelangt gleichzeitig auf die Abführebene 3. In Figur 2 ist zu sehen, dass die Verpackungen 1 nicht streng geordnet auf der Abführebene 3 liegen. Vielmehr können die Verpackungen 1 leicht gegeneinander verdreht sein, und es kommt gelegentlich auch zu Überlappungen zwischen nebeneinander oder hintereinander liegenden Verpackungen 1.

Figur 2 zeigt in schematischer Darstellung die wichtigsten Komponenten eines erfindungsgemäßen Greifersystems 4. Dieses Greifersystem 4 ist oberhalb der Abführebene 3 angeordnet. Es umfasst einen Greifer 5, im vorliegenden Fall in Form einer horizontal ausgerichtete Greiferplatte 5. Die Länge dieser Greiferplatte 5 ist annähernd so lang wie die Länge von fünf hintereinander auf der Abführebene 3 liegenden Verpackungen 1, und die Breite der Greiferplatte 5 entspricht fast der Breite von zwei nebeneinander liegenden Spuren S von Verpackungen 1. Eine Kinematik 6, im vorliegenden Ausführungsbeispiel eine (Kniehebel-)Mechanik 6 mit zwei über ein Kniegelenk 7 verbundenen Armen 8, ist an ihrem unteren Ende über ein weiteres Gelenk 9 mit der Greiferplatte 5 verbunden. Die Kinematik 6 sorgt durch ein Verschwenken der Arme 8 um das Gelenk 7 für ein Anheben oder Absenken der Greiferplatte 5. Dabei sind Mittel vorgesehen, um die Greiferplatte 5 stets in einer horizontalen Ausrichtung zu halten.

Über der in Figur 2 äußerst linken Spur S von Verpackungen 1 befinden sich an der Unterseite der Greiferplatte 5 genau so viele Sauggreifköpfe 10, wie die Spur S Verpackungen 1 enthält. An jedem Sauggreifkopf 10 kann ein Unterdruck oder Vakuum angelegt werden, um die Oberseite einer Verpackung 1 anzusaugen. Die mittels der Sauggreifköpfe 10 erzielbare Saugkraft ist größer als die Gewichtskraft der befüllten Verpackung 1. Vakuumleitungen (nicht gezeigt) können von einer gemeinsamen Vakuumquelle über die Kinematik 6 an die Greiferplatte 5 und von dort über geeignete Verteiler an die einzelnen Sauggreifköpfe 5 führen, um sämtliche Sauggreifköpfe 5 gleichzeitig zu aktivieren. Ferner kann an jedem Sauggreifkopf 10 ein separat ansteuerbares Absperrventil vorgesehen sein. Mittels eines solchen separat ansteuerbarem Absperrventils kann jeder Sauggreifkopf 10 individuell deaktiviert werden, um die von ihm erfasste Verpackung 1 freizugeben. Eine solche zeitlich gestaffelte Freigabe der vom Greifersystem 4 erfassten Verpackungen 1 ermöglicht und erleichtert eine Vereinzelung der Verpackungen 1.

Neben der Reihe von Sauggreifköpfen 10 ist am Greifer 5, speziell an der Unterseite der Greiferplatte 5, ein Niederhalter 11 vorgesehen. Dieser Niederhalter 11 dient dazu, die mittlere Spur S von Verpackungen 1 niederzuhalten, während die linke Spur S von Verpackungen von den Sauggreifköpfen 11 ergriffen und gegebenenfalls angehoben wird. Zu diesem Zweck verfügt der Niederhalter 11 über einen Niederhalteplatte 12, die die gleiche Länge wie die Greiferplatte 5 hat, sich also nahezu über die gesamte Länge der mittleren Spur S von Verpackungen 1 erstreckt. In ihrem vorderen Bereich und in ihrem hinteren Bereich ist die Niederhalteplatte 12 jeweils über eine elastische Druckfeder 13 gegenüber der Greiferplatte 5 gelagert.

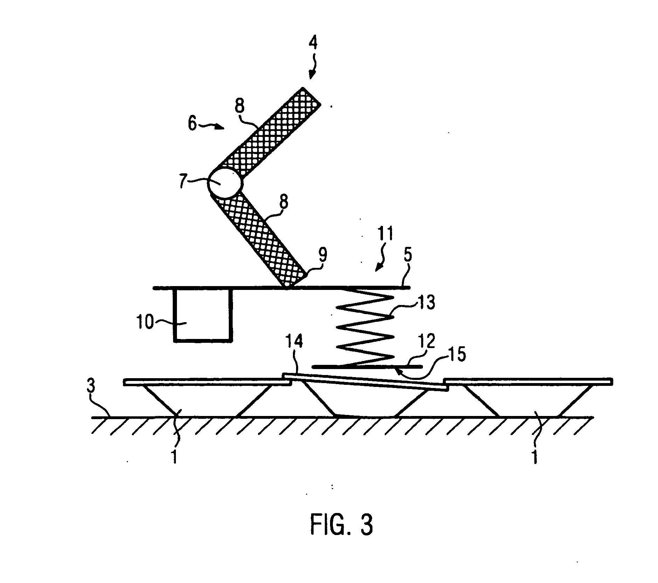

Figur 3 zeigt eine schematische Frontalansicht des in Figur 2 gezeigten Greifersystems 4. Zu erkennen ist zunächst, dass sich die drei in einer Reihe R nebeneinander befindlichen Verpackungen 1 im Bereich ihrer Ränder 14 überlappen. Der Rand 14 der mittleren Verpackung 1 liegt dabei über dem Rand der linken Verpackung 1. Wenn nun die linke Verpackung 1 angehoben würde, könnte sich die mittlere Verpackung 1 weiter verkanten, aufstellen oder weiter unter die rechte Verpackung 1 schieben. Dies zu verhindern ist der Zweck des erfindungsgemäß vorgesehenen Niederhalters 11 am Greifersystem 4.

Die Unterseite der Niederhalteleiste 12 bildet eine Kontaktoberfläche 15, an der der Niederhalter 11 mit den niederzuhaltenden Verpackungen 1 in Kontakt tritt. Mittels der Druckfedern 13 ist diese Kontaktoberfläche 15 elastisch gegenüber der Greiferplatte 5 gelagert. Die Druckfeder 13 hat eine solche Länge, dass die Kontaktoberfläche 15 weiter von der Greiferplatte 5 nach unten vorsteht als die Unterseite der Sauggreifköpfe 10. Dies führt dazu, dass die Kontaktoberfläche 15 beim Absenken der Greiferplatte 5 mittels der Kinematik 6 mit den niederzuhaltenden Verpackungen 1 in Kontakt tritt, bevor die Sauggreifköpfe 10 die zu ergreifenden Verpackungen 1 ansaugen und ergreifen können. Die Elastizität der Druckfedern 13 sorgt gleichzeitig dafür, dass die niederzuhaltenden Verpackungen 1 nicht beschädigt werden, da sich die Kontaktoberfläche 15 der Niederhalteleiste 12 an die Ausrichtung der Oberseiten der Verpackungen 1 anpassen kann. Die Länge der Druckfedern 13 sorgt schließlich auch dafür, dass die niederzuhaltenden Verpackungen 1 während eines ersten Anhebeschritts der mittels der Sauggreifköpfe 10 ergriffenen Verpackungen 1 niedergehalten bleiben. Dies ermöglicht es den ergriffenen Verpackungen 1, sicher nach oben über die Ränder 14 der niedergehaltenen Verpackungen 1 zu gelangen. Wenn sich das Greifersystem 4 anschließend weiter nach oben oder seitlich bewegt, besteht keine Gefahr mehr, dass die niedergehaltenen Verpackungen 1 deplatziert werden könnten.

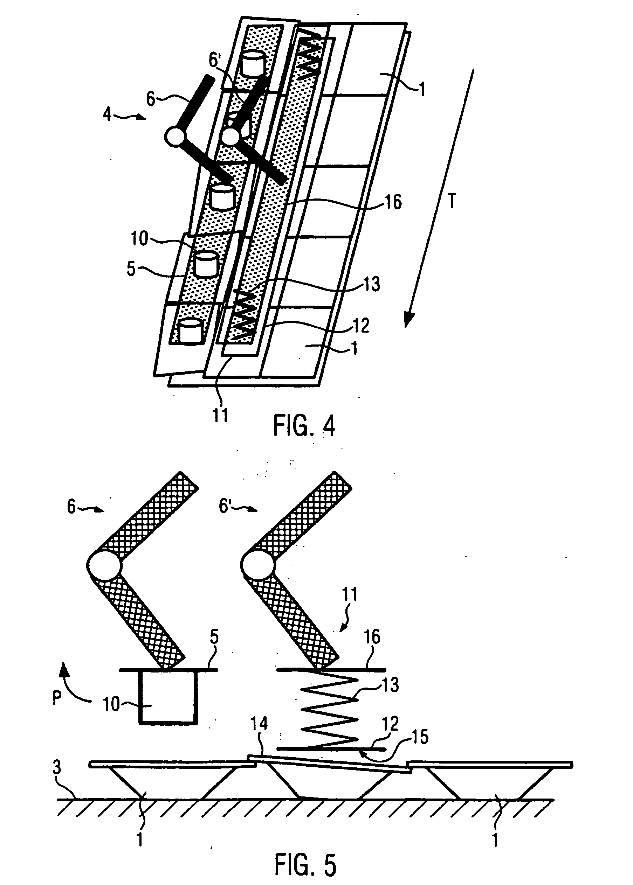

Figur 4 zeigt eine zweite Ausführungsvariante eines erfindungsgemäßen Greifersystems 4. Es unterscheidet sich dadurch vom ersten Ausführungsbeispiel, dass der Niederhalter 11 jetzt nicht mehr an einer gemeinsamen Greiferplatte 5 mit den Sauggreifköpfen 10 befestigt ist, sondern an einer eigenen Niederhalteplatte 16. Greifer 5 und Niederhalter 11 sind hier also unabhängig voneinander. Die Niederhalteplatte 16 ist über eine eigenen Kinematik (im vorliegenden Fall wiederum eine Kniehebelmechanik) 6' unabhängig von der Kinematik 6 des Greifers 5 bewegbar. Über zwei Druckfedern 13 ist unter der Niederhalteplatte 16 wie im ersten Ausführungsbeispiel eine Niederhalteleiste 12 befestigt. Ihre Unterseite dient als Kontaktoberfläche 15, mit dem der Niederhalter 11 mit den niederzuhaltenden Verpackungen 1 in Kontakt tritt.

Die Greiferplatte 5 hat im zweiten Ausführungsbeispiel eine Breite, die etwas geringer ist als die Breite einer Spur S von Verpackungen 1. Auf ihrer Unterseite trägt die Greiferplatte 5 wiederum hintereinander fünf Sauggreifköpfe 10, um die zu ergreifenden Verpackungen 1 anzusaugen und an der Greiferplatte 5 halten zu können.

Figur 5 zeigt eine schematische Vorderansicht des in Figur 4 gezeigten Ausführungsbeispiels. Zu erkennen ist hier noch einmal, dass im Gegensatz zum ersten Ausführungsbeispiel eine Greiferplatte 5 und eine Niederhalteplatte 16 getrennt voneinander vorgesehen und jeweils mittels einer eigenen Kinematik 6, 6' unabhängig voneinander bewegbar sind. Die Kinematiken 6, 6' können dabei an einem gemeinsamen Roboter (z.B. einem Delta-Roboter) vorgesehen sein, oder an zwei separaten Robotern.

Das erfindungsgemäße Verfahren beziehungsweise der Betrieb der Verpackungsmaschine 2 mit dem erfindungsgemäßen Greifersystem 4 laufen wie folgt ab.

In der Verpackungsmaschine 2 wird eine Gruppe von Verpackungen 1 erzeugt, die in n nebeneinander liegenden Spuren S und m hintereinander liegenden Reihen R angeordnet sind. Beispielsweise kann eine solche Gruppe von Verpackungen 1 drei Spuren und fünf oder sechs Reihen R enthalten. Diese Gruppe von Verpackungen wird auf eine Abführebene 3 transportiert, von der die Verpackungen 1 einer Vereinzelung zugeführt werden sollen. Wenn sich die Gruppe von Verpackungen 1 auf der Abführebene 3 befindet, kann es vorkommen, dass sich nebeneinander liegende Verpackungen 1 an ihren Rändern 14 überlappen.

Das erfindungsgemäße Greifersystem 4 senkt sich nun von oben auf die Gruppe von Verpackungen 1. Dabei wird die Greiferplatte 5 mittels der Kinematik 6 so abgesenkt, dass sich die Sauggreifköpfe 10 über der äußersten linken Spur S von Verpackungen 1 befinden. Im ersten Ausführungsbeispiel sorgt ein Absenken der Greiferplatte 5 dafür, dass auch der Niederhalter 11 abgesenkt wird und mit seiner Kontaktoberfläche 15 die mittlere, niederzuhaltende Spur S von Verpackungen 1 beaufschlagt, bevor die Sauggreifköpfe 10 die zu ergreifenden Verpackungen 1 ergreifen und bewegen. Im zweiten Ausführungsbeispiel wird die Niederhalteplatte 16 mittels ihrer Kinematik 6' parallel zur Greiferplatte 5 abgesenkt, um ebenfalls zuerst einen Kontakt mit der niederzuhaltenden Spur von Verpackungen 1 herzustellen.

Wenn die mittlere, niederzuhaltende Spur S von Verpackungen 1 mittels der Kontaktoberfläche 15 kontaktiert ist, ist die Bewegungsmöglichkeit dieser niedergehaltenen Verpackungen 1 gebremst oder beschränkt, da sie sich nur noch gegen die von der Druckfeder 13 ausgeübte Kraft und gegen die Reibungskräfte zwischen der Verpackung 1 und der Kontaktoberfläche 15 bewegen können. Die Greiferplatte 5 wird nun weiter abgesenkt, bis die Sauggreifköpfe 10 mit den zu ergreifenden Verpackungen 1 in Kontakt treten und diese nach ihrer Aktivierung ansaugen und so am Greifersystem 4 festhalten. Nun wird die Greiferplatte 5 wieder angehoben. Die ergriffenen Verpackungen 1 bewegen sich dabei an den Rändern 14 der niedergehaltenen Verpackungen 1 vorbei. Im zweiten Ausführungsbeispiel des Greifersystems 4 kann statt einer Aufwärtsbewegung oder zusätzlich dazu auch eine seitliche (Schwenk-) Bewegung erfolgen, die durch den Pfeil P angedeutet ist, ohne dass sich dabei die Niederhalteplatte 16 bewegt und die Niederhaltekraft auf die niedergehaltenen Verpackungen 1 sich ändert.

Sobald die ergriffenen Verpackungen 1 von den niedergehaltenen Verpackungen 1 freigekommen sind, können die ergriffenen Verpackungen 1 mittels des Greifersystems 4 weiter transportiert werden, beispielsweise auf einen Abführförderer. Dort können die ergriffenen Verpackungen 1 gleichzeitig oder zeitlich gestaffelt freigegeben werden. Im zweiten Ausführungsbeispiel wird die Niederhalteplatte 16 mittels ihrer Kinematik 6' angehoben, sobald sich die linke Spur S von Verpackungen 1 genügend weiter entfernt hat.

Sobald das Greifersystem 4 die ergriffene, linke Spur von Verpackungen 1 wieder freigegeben hat, ergreift es in der zuvor beschriebenen Weise die zuvor niedergehaltene, mittlere Spur S von Verpackungen 1. Gleichzeitig hält der Niederhalter 11 nun die rechte Spur S von Verpackungen 1 nieder. Dieser Vorgang wiederholt sich so oft, bis alle Spuren S von Verpackungen 1 abtransportiert wurden.

Ausgehend von den dargestellten Ausführungsbeispielen können die erfindungsgemäße Verpackungsmaschine 2 beziehungsweise das erfindungsgemäße Greifersystem 4 sowie das erfindungsgemäße Verfahren in vielfacher Hinsicht abgewandelt werden. Beispielsweise muss es sich bei den Greifer- und Niederhalteplatten 5, 16 nicht tatsächlich um Platten handeln, sondern es kann sich auch um Rahmen, Rohre oder andere Strukturen handeln. Statt der Niederhalteleiste 12 könnte auch eine Druckfeder 13 für jede einzelne, niederzuhaltende Verpackung 1 vorgesehen sein. Anstelle der Druckfedern 13 oder zusätzlich dazu könnte zwischen der Greifer- oder Niederhalteplatte 5, 16 und der Niederhalteleiste 12 eine Schaumstofflage vorgesehen sein, die wie die Druckfedern 13 zur elastisch nachgiebigen Lagerung der Niederhalteleiste 12 dient. Denkbar wäre es dabei auch, dass die Niederhalteleiste 12 entfällt, sodass nun die Oberfläche der Schaumstofflage selbst die Kontaktoberfläche 15 darstellt, mittels derer der Niederhalter 11 mit den niederzuhaltenden Verpackungen 1 in Kontakt tritt.

In jeder denkbaren Ausführungsvariante der Erfindung wäre es auch möglich, dass das Greifersystem 4 und der Niederhalter 11 zum Greifen beziehungsweise zum Niederhalten nicht einer Spur S von Verpackungen 1, sondern einer Reihe R von Verpackungen 1 ausgebildet ist. Im Unterschied zur Darstellung in den Figuren 2 und 4 wären die Greifer- und Niederhalteplatten 5, 16 dann nicht in Transportrichtung T, sondern quer zur Transportrichtung T ausgerichtet. In einer solchen Variante der Erfindung würden die Reihen R von Verpackungen 1 beispielsweise von vorne nach hinten von der Abführebene 3 abgeräumt.

## Patentansprüche

1. Greifersystem (4) mit einem Greifer (5) zum Ergreifen und Anheben wenigstens eines zu ergreifenden Objekts (1), insbesondere einer Verpackung (1), **dadurch gekennzeichnet, dass** das Greifersystem (4) einen Niederhalter (11) aufweist, der zum Niederhalten wenigstens eines neben dem zu ergreifenden Objekt (1) gelegenen Objekts (1) während des Anhebens des zu ergreifenden Objekts (1) ausgebildet ist.

2. Greifersystem nach Anspruch 1, **dadurch gekennzeichnet, dass** der Greifer (5) zum Ergreifen einer Mehrzahl von Objekten (1) ausgebildet ist und der Niederhalter (11) zum Niederhalten einer Mehrzahl von Objekten (1) ausgebildet ist.

3. Greifersystem nach einem der vorangehenden Ansprüche, **dadurch gekennzeichnet, dass** der Greifer (5) zum Ergreifen einer Spur (S) oder Reihe (R) von Objekten (1) ausgebildet ist und der Niederhalter (11) zum Niederhalten einer Spur (S) bzw. Reihe (R) von Objekten (1) ausgebildet ist.

4. Greifersystem nach einem der vorangehenden Ansprüche, **dadurch gekennzeichnet, dass** der Greifer (5) wenigstens einen Sauggreifkopf (10) zum Ergreifen eines Objekts (1) aufweist.

5. Greifersystem nach einem der vorangehenden Ansprüche, **dadurch gekennzeichnet, dass** der Niederhalter (11) eine elastisch nachgebende Oberfläche (15) aufweist.

6. Greifersystem nach Anspruch 5, **dadurch gekennzeichnet, dass** die elastisch nachgebende Oberfläche (15) eine Oberfläche einer Schaumstofflage ist.

7. Greifersystem nach Anspruch 5, **dadurch gekennzeichnet, dass** die elastisch nachgebende Oberfläche (15) eine Oberfläche einer auf einer Schaumstofflage und/oder auf wenigstens einer Feder (13) gelagerten Platte oder Leiste (12) ist.

8. Greifersystem nach einem der vorangehenden Ansprüche, **dadurch gekennzeichnet, dass** der Niederhalter (11) an die Bewegung des Greifers (5) gekoppelt ist.

9. Greifersystem nach einem der Ansprüche 1 bis 7, **dadurch gekennzeichnet, dass** der Greifer (5) zumindest über einen Teil seines Bewegungsbereichs unabhängig vom Niederhalter (11) bewegbar ist.

10. Greifersystem nach Anspruch 9, **dadurch gekennzeichnet, dass** der Greifer (5) dazu konfiguriert ist, eine Horizontal- und/oder eine Schwenkbewegung unabhängig von einer Bewegung des Niederhalters (11) auszuführen.

11. Verpackungsmaschine (2) mit einem Greifersystem (4) nach einem der vorangehenden Ansprüche.

12. Verfahren zum Ergreifen und Anheben einer Spur (S) oder Reihe (R) von Verpackungen (1) mittels eines Greifersystems (4), **dadurch gekennzeichnet, dass** eine neben der zu ergreifenden Spur (S) bzw. Reihe (R) von Verpackungen (1) liegende Spur (S) bzw. Reihe (R) von Verpackungen (1) während einer durch das Greifersystem (4) verursachten Bewegung der zu ergreifenden Spur (S) bzw. Reihe (R) von Verpackungen (1) in ihrer Bewegung eingeschränkt und/oder gebremst wird.

13. Verfahren nach Anspruch 12, **dadurch gekennzeichnet, dass** die in ihrer Bewegung eingeschränkte und/oder gebremste Spur (S) oder Reihe (R) von Verpackungen (1) niedergehalten wird.

## Claims

1. A gripping system (4) comprising a gripper (5) for gripping and lifting at least one object (1) to be gripped, in particular a package (1), **characterized in that** the gripping system (4) is provided with a down holder (11) which is configured for holding down at least one object (1) located adjacent the object (1) to be gripped, while the object (1) to be gripped is being lifted.

2. A gripping system according to claim 1, **characterized in that** the gripper (5) is configured for gripping a plurality of objects (1), and that the downholder (11) is configured for holding down a plurality of objects (1).

3. A gripping system according to one of the preceding claims, **characterized in that** the gripper (5) is configured for gripping a track (S) or row (R) of objects (1), and that the downholder (11) is configured for holding down a track (S) or row (R) of objects (1).

4. A gripping system according to one of the preceding claims, **characterized in that** the gripper (5) comprises at least one suction gripping head (10) for gripping an object (1).

5. A gripping system according to one of the preceding claims, **characterized in that** the downholder (11) comprises an elastically yielding surface (15).

6. A gripping system according to claim 5, **characterized in that** the elastically yielding surface (15) is the surface of a foam layer.

7. A gripping system according to claim 5, **characterized in that** the elastically yielding surface (15) is a surface of a plate or strip (12) supported by a foam layer and/or at least one spring (13).

8. A gripping system according to one of the preceding claims, **characterized in that** the downholder (11) is coupled to the movement of the gripper (5).

9. A gripping system according to one of the claims 1 to 7, **characterized in that** the gripper (5) is adapted to be moved, at least over part of its range of movement, independently of the downholder (11).

10. A gripping system according to claim 9, **characterized in that** the gripper (5) is configured for executing a horizontal and/or a pivotal movement independently of a movement of the downholder (11).

11. A packaging machine (2) comprising a gripping system (4) according to one of the preceding claims.

12. A method of gripping and lifting a track (S) or row (R) of packages (1) by means of a gripping system (4), **characterized in that** the movement of a track (S) or row (R) of packages (1) located adjacent the track (S) or row (R) of packages (1) to be gripped is restricted and/or decelerated when said track (S) or row (R) of packages (1) to be gripped is being moved by the gripping system (4).

13. A method according to claim 12, **characterized in that** the track (S) or row (R) of packages (1) whose movement is restricted and/or decelerated is held down.

## Revendications

1. Système de préhension (4) avec un organe de préhension (5) pour saisir et soulever au moins un objet (1) à saisir, en particulier un emballage (1), **caractérisé en ce que** le système de préhension (4) comporte un abaisseur (11) qui est conçu pour maintenir abaissé au moins un objet (1) placé près de l'objet (1) à saisir, pendant le soulèvement dudit objet (1) à saisir.

2. Système de préhension selon la revendication 1, **caractérisé en ce que** l'organe de préhension (5) est conçu pour saisir plusieurs objets (1) et l'abaisseur (11) est conçu pour maintenir abaissés plusieurs objets (1).

3. Système de préhension selon l'une des revendications précédentes, **caractérisé en ce que** l'organe de préhension (5) est conçu pour saisir une ligne (S) ou une rangée (R) d'objets (1) et l'abaisseur (11) est conçu pour maintenir abaissée une ligne (S) ou une rangée (R) d'objets (1).

4. Système de préhension selon l'une des revendications précédentes, **caractérisé en ce que** l'organe de préhension (5) comporte au moins une tête de préhension aspirante (10) pour saisir un objet (1).

5. Système de préhension selon l'une des revendications précédentes, **caractérisé en ce que** l'abaisseur (11) présente une surface élastiquement souple (15).

6. Système de préhension selon la revendication 5, **caractérisé en ce que** la surface élastiquement souple (5) est constituée par une surface d'une couche de matière alvéolaire.

7. Système de préhension selon la revendication 5, **caractérisé en ce que** la surface élastiquement souple (15) est constituée par une surface d'une plaque ou bande (12) posée sur une couche de matière alvéolaire et/ou sur au moins un ressort (13).

8. Système de préhension selon l'une des revendications précédentes, **caractérisé en ce que** l'abaisseur (11) est couplé au mouvement de l'organe de préhension (5).

9. Système de préhension selon l'une des revendications 1 à 7, **caractérisé en ce que** l'organe de préhension (5) est mobile sur une partie au moins de sa zone de mouvement indépendamment de l'abaisseur (11).

10. Système de préhension selon la revendication 9, **caractérisé en ce que** l'organe de préhension (5) est conçu pour décrire un mouvement horizontal et/ou pivotant indépendamment d'un mouvement de l'abaisseur (11).

11. Machine d'emballage (2) avec un système de préhension (4) selon l'une des revendications précédentes.

12. Procédé pour saisir et soulever une ligne (S) ou une rangée (R) d'emballages (1) à l'aide d'un système de préhension (4), **caractérisé en ce qu'**une ligne (S) ou une rangée (R) d'emballages (1) située près de la ligne (S) ou de la rangée (R) d'emballages (1) à saisir est restreinte et/ou freinée dans son mouvement pendant un mouvement de la ligne (S) ou de la bande (R) d'emballages (1) à saisir qui est provoqué par le système de préhension (4).

13. Procédé selon la revendication 12, **caractérisé en ce que** la ligne (S) ou la rangée (R) d'emballages (1) qui est restreinte et/ou freinée dans son mouvement est maintenue abaissée.
